# EUROPEAN PATENT SPECIFICATION

(11) **EP 0 480 244 B1**
(45) Date of publication and mention of the grant of the patent: **08.12.1999**
(21) Application number: 91116318.6
(22) Date of filing: 25.09.1991
(51) Int. Cl.: C08G 65/46, C08L 71/12, C08K 3/24, C08K 5/09

(54) **Methods for reducing odor in polyphenylene ether resins**
Verfahren zur Geruchsreduzierung in Polyphenylenetherharzen
Procédé pour la réduction de l'odeur de résines de poly(éther de phénylène)

(30) Priority: 04.10.1990 US 592439
(43) Date of publication of application: 15.04.1992
(73) Proprietor: GENERAL ELECTRIC COMPANY, Schenectady New York 12305 (US)
(72) Inventor: Bopp, Richard Charles, West Coxsackie, New York 12192 (US); Hossan, Robert (NMN), Albany, New York 12203 (US)
(74) Representative: Szary, Anne Catherine, Dr.

(56) References cited:
- EP-A- 0 346 656
- EP-A- 0 375 937
- PATENT ABSTRACTS OF JAPAN vol. 15, no. 377 (C-870)(4905) 24 September 1991
- PATENT ABSTRACTS OF JAPAN vol. 14, no. 294 (C-732)(4237) 26 June 1990
- JAPANESE PATENTS REPORTS Section Ch, volume 90, no 49, Derwent Publications Ltd., London, GB; Class A, AN 366512

## Description

### FIELD OF THE INVENTION

The present invention relates to methods for reducing odor in polyphenylene ether resins. More particularly, the present invention relates to methods for reducing odors in polyphenylene ether resins containing butanal by the addition of an aqueous solution of an acid or anhydride compound to and steam stripping of the polyphenylene ether resins.

### BACKGROUND OF THE INVENTION

Polyphenylene ether resins exhibit a desirable combination of chemical, physical and electrical properties over a wide temperature range. This combination of properties renders polyphenylene ether resins suitable for use in a broad range of applications. Often times, polyphenylene ether resins are blended with other resins including various types of polystyrene resins to improve the processability of the polyphenylene ether resins and increase their fields of application.

It has recently become desirable to use polyphenylene ether resin compositions in food contact applications. It is therefore necessary to produce polyphenylene ether resin compositions which are both substantially odorless and tasteless. Consequently, the polyphenylene ether resin compositions must be substantially free from volatile materials which have odors or which may have a deleterious effect upon the flavor of food in contact with the polyphenylene ether resin compositions.

EP-A-0346656 discloses methods of reducing odor in polyphenylene ether resins wherein a carboxylic acid or anhydride is added to the resins to reduce their odor. The present inventors have discovered that although those methods represent a significant advantage over the prior art techniques for odor reduction, they do not effectively reduce the butanal content to a level which reduces the odor of the polyphenylene ether resin compositions sufficient for use in some food packaging applications. EP-A-0375937 discloses reducing the amount of volatile substances in polyphenylene ether or polyphenylene ether/polystyrene compositions by extruding the resins in a single pass using a plurality of stages of water injection and vacuum venting. EP-A-0435023 discloses additional methods for reducing odor in polyphenylene ether resins by removing volatile substances from the resin compositions. EP-A-0435023 discloses that the volatile substances may be removed from polyphenylene ether resin compositions by extruding the resins with multiple stages of water injection followed by vacuum venting. However, a need still exists for further improved methods for reducing the odor, particularly odor caused by high butanal contents, in polyphenylene ether resin compositions.

### SUMMARY OF THE INVENTION

Accordingly, it is an object of the present invention to provide improved methods for reducing the odor of polyphenylene ether resin compositions. It is a more specific object of the invention to provide improved methods for reducing the odor of polyphenylene ether resin compositions by reducing the amount of butanal contained in the compositions. It is a further object of the invention to provide methods for producing polyphenylene ether resin compositions which are more suitable for food packaging applications. It is a further object of the invention to provide improved methods for preparing polyphenylene ether resin suitable for use in low density foam products which are intended for food packaging applications.

These and additional objects are provided by the method according to the present invention for reducing odor in polyphenylene ether resin compositions. The method according to the present invention comprises adding an aqueous solution of a compound selected from the group consisting of carboxylic acids and anhydrides and carbonic acid to a polyphenylene ether resin during melt compounding of the polyphenylene ether resin. The method according to the present invention further includes steam stripping the polyphenylene ether resin. Steam stripping of the polyphenylene ether resin comprises injecting water into the polyphenylene resin during compounding and vacuum venting the resulting water/resin mixture.

The present inventors have determined that the combination of the use of the additive compound and steam stripping significantly reduces the butanal content of the polyphenylene ether resin and therefore significantly reduces odor in the polyphenylene ether resin compositions. In another embodiment of the present methods, a polyphenylene ether resin may be melt compounded with one or more additional resins, for example, a polystyrene resin.

These and additional objects and advantages provided by the methods of the present invention will be more fully understood in view of the following detailed description.

### BRIEF DESCRIPTION OF THE DRAWING

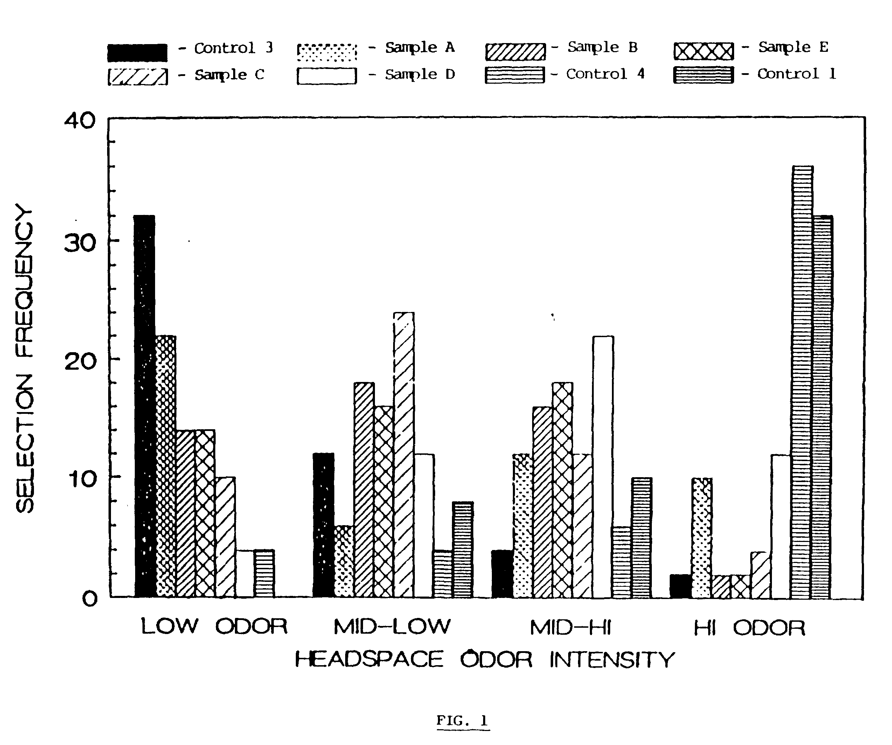

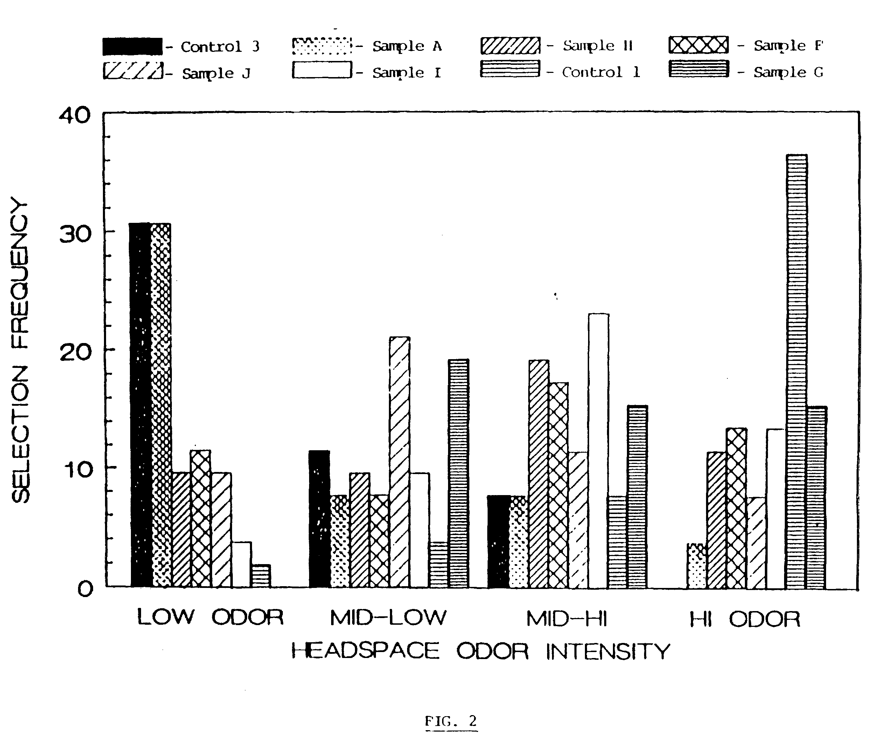

The drawing comprises Figs. 1 and 2 which set forth the results of a sensory analysis test as described in Example 2.

### DETAILED DESCRIPTION

The method according to the present invention reduces the odor from polyphenylene ether resin compositions. More specifically, the method according to the present invention reduces the contents of butanal and various amine derivatives in the polyphenylene ether resins, thereby reducing odor from the resins. Butanal, also known as butyraldehyde, and other volatile materials are contained in polyphenylene ether resins as a result of the polyphenylene ether resin manufacturing process. Specifically, butanal is a thermal oxidation product of dibutylamine. Even low levels of butanal cause the resins to have an undesirable burnt-sweet odor. The method according to the present invention comprises the steps of adding an aqueous solution of an additive compound selected from the group consisting of carboxylic acids and anhydrides and carbonic acid to the polyphenylene ether resins during melt compounding of the resins, and steam stripping the polyphenylene ether resins by injecting water therein and vacuum venting the resulting water/resin mixtures.

Polyphenylene ether resins adapted for use in the present invention comprise polymers and copolymers having repeating structural units of the following general formula: 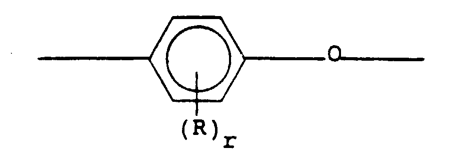 wherein each R individually represents a monovalent substituent such as hydrogen, halogen, alkyl, aryl, alkoxy and other hydrocarbon groups, and r is from 1 to 4.

The polyphenylene ether polymers suitable for use in the present invention are well known in the art and may be prepared by any of a number of processes known in the art from corresponding phenols or reactive derivatives thereof. Examples of polyphenylene ether resins and methods for their production are set forth in the Hay U. S. Patents Nos. 3,306,874 and 3,306,875, in the Stamatoff U. S. Patents Nos. 3,257,357 and 3,257,358, and in U. S. Patent 4,935,472 of S. B. Brown et al. Throughout the specification and claims the term "polyphenylene ether resin" includes unsubstituted polyphenylene ether polymers, substituted polyphenylene ether polymers, polyphenylene ether copolymers and blends thereof.

Preferred polyphenylene ether polymers adapted for use in the present invention include, but are not limited to, poly(2,6-dimethyl-1,4-phenylene)ether; poly(2,3,6-trimethyl-1,4-phenylene) ether; poly(2,6-diethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene)ether; poly(2,6-dibromo-1,4-phenylene)ether; poly(3-bromo-2,6-dimethyl-1,4-phenylene)ether, copolymers thereof and -mixtures thereof. Particularly preferred polyphenylene oxide polymers for use in the compositions of the present invention include poly(2,6-dimethyl-1,4-phenylene) ether, poly(2,3,6-trimethyl-1,4-phenylene)ether, and blends of or copolymers including units of 2,3,6-trimethyl-1,4-phenylene ether and units of 2,6-dimethyl-1,4-phenylene ether. Examples of such polymers and copolymers are also set forth in U. S. Patent No. 4,806,297.

In accordance with the present methods, the compound which is added to the polyphenylene ether resin during melt compounding comprises a carboxylic acid, a carboxylic acid anhydride or carbonic acid.

The carboxylic acid useful in the methods of the present invention can be selected from any of the known carboxylic acids which are represented by the general formula:

X-COOH

where X is selected from hydrogen (formic acid), methyl (acetic acid), alkyl, CH₃(CH₂)n where n is a whole number and is at least equal to 1 and is preferably 2 to 16, aryl, branched cyclic or substituted alkyl acids, branched cyclic or substituted alkenyl, or substituted aryl.

Among those acids which may be effective are formic acid, acetic acid, propionic acid, butyric acid, valeric acid, caproic acid, caprylic acid, capric acid, lauric acid, myristic acid, palmitic acid, stearic acid, oleic acid, linoleic acid, linolenic acid, cyclohexane-carboxylic acid, phenylacetic acid, benzoic acid, o-toluic acid, m-toluic acid, p-toluic acid, o-chlorobenzoic acid, m-chlorobenzoic acid, p-chlorobenzoic acid, o-bromobenzoic acid, m-bromobenzoic acid, p-bromobenzoic acid, o-nitrobenzoic acid, m-nitrobenzoic acid, p-nitrobenzoic acid, salicylic acid, p-hydroxybenzoic acid, anthranilic acid, m-aminobenzoic acid, p-aminobenzoic acid, o-methoxybenzoic acid, m-methoxybenzoic acid, p-methoxybenzoic acid, methyl butyric acid, dimethylvaleric acid, phenylbutyric acid, chloromethylbutyric acid, hydroxypropionic acid (lactic acid), dinitrobenzoic acid, methylbutanoic acid, phenylpropanoic acid, (chlorophenyl) butanoic acid and butenoic acid, and the like.

Also useful in the methods of the present invention are dicarboxylic acids which are represented by the general formula:

HOOC-X-COOH

where x is a single bond or is a difunctional radical selected from straight or branched alkyl radicals, straight or branched alkenyl radicals, aryl radicals, or substituted radicals of any of the foregoing. Where X is a single bond, the resulting dicarboxylic acid is oxalic acid. Where X represents a difunctional radical, some of the resulting dicarboxylic acids which may be utilized are malonic acid, succinic acid, glutaric acid, adipic acid, maleic acid, fumaric acid, phthalic acid, isophthalic acid, terephthalic acid, bromoglutaric acid, dimethylglutaric acid and the like.

The carboxylic acid for use in the methods in the present invention may comprise a tricarboxylic acid such as citric acid or the like. Anhydrides of all of the above acids may also be useful for use in the present methods.

In a preferred embodiment, the compound which is added to the polyphenylene ether resin comprises a carboxylic acid selected from adipic acid, glutaric acid, malonic acid, succinic acid, phthalic acid, maleic acid and citric acid, or selected from anhydrides of these acids, or selected from mixtures of these acids and anhydrides. In a particularly preferred embodiment, the compound which is added to the polyphenylene ether resin comprises citric acid or citraconic anhydride. In an alternate preferred embodiment, the compound which is added to the polyphenylene ether resin comprises carbonic acid.

The acid or anhydride compound is added to the polyphenylene ether resin in an amount sufficient to reduce the odor of the polyphenylene ether resin. Preferably, the acid or anhydride compound is added in-an amount of from 0.01 to 10 parts by weight per 100 parts by weight of the polyphenylene ether resin. In a more preferred embodiment, the acid or anhydride compound is added in an amount of from 0.05 to 5 parts by weight per 100 parts by weight of the polyphenylene ether resin.

In accordance with the present methods, an aqueous solution of the acid or anhydride compound is added to the polyphenylene ether resin during melt compounding of the resin, and the resin is steam stripped. The steam stripping process comprises injecting water into the polyphenylene ether resin and vacuum venting the resulting water/resin mixture.

As is well known, polyphenylene ether resins are amorphous and soften sufficiently for melt compounding when heated above their glass transition temperatures, Tg. When heated above its Tg, a polyphenylene ether resin is commonly referred to as a melt. The acid or anhydride compound is added to the polyphenylene ether resin in an aqueous solution, for example, an aqueous solution containing from 5 to 75 weight percent of the acid or anhydride. It will be apparent that the carbonic acid is added in such an aqueous solution. Addition of the acid or anhydride in an aqueous solution will also reduce screw wear of an extruder compounding apparatus.

In a preferred embodiment, the acid or anhydride is added to the polyphenylene ether resin after the resin has been plasticated into a substantially uniform melt, for example, downstream of the solid/melt transition zone of an extruder. This embodiment is preferred because screw wear and corrosion are both significantly reduced. That is, the acid or anhydride is introduced as an aqueous solution in a region of the extruder or other compounding apparatus where there is no abrasion caused by unmelted polyphenylene ether powder. Additionally, the melt temperature of the resin is lowered owing to the cooling effect of water vaporization. Moreover, the residence time of the acid or anhydride in the extruder or other compounding apparatus is reduced since devolatilization at the vacuum venting zone can immediately follow the injection of the aqueous solution of the acid or anhydride.

In additional embodiments of the present methods, the acid or anhydride compound may be added to the polyphenylene ether resin in a series of steps, for example, by multiple, sequential injections of an aqueous acid solution. Additionally, the steam stripping may be conducted in one or more steps, for example, by multiple sequential injections of water followed by vacuum venting. The present methods are advantageous, however, in that a single steam stripping step significantly reduces the butanal content to nondetectable levels, i.e., less than about 1 ppm.

The methods according to the present invention significantly reduce the butanal levels in polyphenylene ether resins, and thereby reduce odor from these resins and from blend compositions containing these resins. The methods according to the present invention may also result in lower levels of other volatiles contained in the polyphenylene ether resins.

In a further embodiment of the present invention, an additional resin and/or other additives may be melt compounded with the polyphenylene ether resin. The additional resin and/or other additives can be admixed with the polyphenylene ether prior, during or subsequent to the melt compounding and steam stripping steps of the present methods. Preferably, the additional resin comprises a polystyrene resin. It is preferred that the additional resin such as a polystyrene resin is melt compounded with the polyphenylene ether resin after the acid or anhydride compound is added to the polyphenylene ether resin or a polyphenylene ether resin blend. On the other hand, the steam stripping of the polyphenylene ether resin may be effected either prior to, subsequent to, or both prior and subsequent to melt compounding the polyphenylene ether resin with the additional resin such as a polystyrene resin, or other additive. The resulting blend compositions contain reduced butanal levels and thereby exhibit reduced odor.

Preferably, in producing resin blends according to the methods of the present invention, a polystyrene resin is combined with the polyphenylene ether resin in an amount which produces a blend containing from about 5 to about 95 weight percent polyphenylene ether resin and from about 95 to about 5 weight percent polystyrene resin. More preferably, the polystyrene resin is combined with the polyphenylene ether resin in an amount which produces a blend containing from about 20 to 80 weight percent polyphenylene ether resin and from about 80 to about 20 weight percent polystyrene resin.

Various polystyrene resins are suitable for use in producing blends according to the methods of the present invention. The polystyrene resins contain units derived from a styrene compound of the following formula: 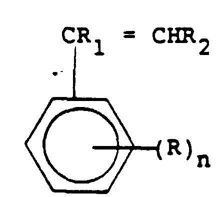 wherein R₁ and R₂ are selected from the group consisting of lower alkyl or alkenyl groups of from, for example, 1 to 6 carbon atoms and hydrogen, each R is selected from the group consisting of halogen, hydrogen and lower alkyl or alkenyl groups of from, for example, 1 to 6 carbon atoms, and n is an integer of from 0 to 5. Throughout the specification and claims the term "polystyrene resin" includes unsubstituted polystyrene, substituted polystyrene and polystyrene copolymer resins. Suitable polystyrene resins include, but are not limited to, polystyrene homopolymers including atactic polystyrenes, halogenated polystyrenes, poly-alpha-methylstyrenes, poly-para-methylstyrenes, styrene-acrylonitrile copolymers, styrene-maleic anhydride copolymers, styrene-butadiene copolymers, rubber-modified polystyrenes and the like, and mixtures thereof. These polystyrene resins and their methods of preparation are well known in the art.

The methods of the present invention are further demonstrated by the following examples.

### EXAMPLE 1 (Comparative)

This example demonstrates the methods according to the present invention using various acids and anhydrides. Specifically, a polyphenylene ether resin having an intrinsic viscosity of 0.40 dl/g in chloroform at 25°C was melt compounded on a 53 mm Werner-Pfleiderer twin screw extruder together with a carboxylic acid or anhydride compound according to the present invention. After melt compounding, water was injected into the polyphenylene ether resin followed by vacuum venting of the water-containing resin. A polystyrene resin (Mobil 1800 P) was then compounded with the polyphenylene ether resin followed by a second steam-stripping step wherein water was injected into the resin blend and the water-containing resin blend was vacuum vented. The specific acid and anhydride compounds employed in this example are set forth in Table I, together with the amount of the respective acid or anhydride compound which was added to the polyphenylene ether resin in parts by weight (pbw) per 50 parts by weight polyphenylene ether resin. The resulting blend compositions contained an equal amount of polyphenylene ether resin and polystyrene resin. The residual butanal level contained in each of the resulting blend compositions is also set forth in Table I. With reference to Table I, it is noted that the limit of quantification for butanal is 25 ppm, and ND in Table I specifies that the level of butanal was not detectable. The parenthetically enclosed values in Table I were extrapolated to concentrations below the lowest calibration standard. Also described in Table I is a control sample, Control-1, which was similarly produced on a 120 mm Werner-Pfleiderer twin screw extruder but without the addition of a carboxylic acid or anhydride to the polyphenylene ether resin.

**TABLE I -**

| RESIDUAL BUTANAL | | | |
|---|---|---|---|
| SAMPLE | ACID/ANHYDRIDE | AMOUNT (pbw) | BUTANAL (ppm) |
| CONTROL-1 | -- | 0.00 | 125 |
| A | citric acid | 0.50 | ND |
| B | citric acid | 1.00 | ND |
| C | oxalic acid | 1.00 | (8) |
| D | glutaric acid | 1.00 | (10) |
| E | adipic acid | 1.00 | ND |
| F | phthalic acid | 1.00 | (5) |
| G | phthalic anhydride | 1.00 | ND |
| H | malonic acid | 1.00 | ND |
| I | succinic acid | 1.00 | (3) |
| J | succinic anhydride | 1.00 | ND |

As is evident from the results set forth in Table I, the method according to the present invention significantly reduces the butanal level in a polyphenylene ether resin blend composition to levels which are substantially undetectable, whereby the compositions exhibit little or no detectable odor.

### COMPARATIVE EXAMPLE

For purposes of comparison, similar blend compositions were prepared with the addition of a carboxylic acid or anhydride compound to the polyphenylene ether resin. However, these comparative compositions were prepared on a 30 mm Werner-Pfleiderer twin-screw extruder in the absence of the steam stripping step which is included in the methods of the present invention. The acid and anhydride compounds which were employed are set forth in Table II. The acid and anhydride compounds were employed in an amount of 1 part by weight per 50 parts by weight polyphenylene ether resin. The blends comprised a 50-50 mixture of polyphenylene ether resin and polystyrene resin as in Example 1. The residual butanal levels in the resulting blend compositions are also set forth in Table II. A control composition, Control-2, was also prepared according to this method wherein neither a carboxylic acid nor an anhydride compound was added to the resins.

**TABLE II --**

| COMPARATIVE EXAMPLE | | |
|---|---|---|
| SAMPLE | ACID/ANHYDRIDE | BUTANAL (ppm) |
| CONTROL-2 | -- | 140 |
| C-A | adipic acid | 32 |
| C-B | glutaric acid | 33 |
| C-C | citric acid | 35 |
| C-D | succinic acid | 68 |
| C-E | succinic anhydride | 49 |

While the method disclosed in this Comparative Example resulted in reduced levels of butanal in the resulting blend compositions, the levels of butanal contained in these compositions were significantly higher than those attained by the methods according to the present invention as described in Example 1. Moreover, the blend compositions resulting from this Comparative Example exhibited an undesirable odor.

### EXAMPLE 2 (Comparative)

The relative odor intensity of the materials produced in Example 1 was determined in a sensory analysis test of head space odor. The samples were divided into two groups, Group A and Group B, as set forth in Table III. Each of Groups A and B contained the Control-1 sample. Each group also contained an additional control sample, Control-3, which comprised pure polyphenylene ether resin which had been melt compounded on a 53 mm Werner-Pfleiderer twin screw extruder and subjected to four steam stripping procedures. Group A also included a fourth control sample, Control-4, which comprised three parts by weight of a polysalicylate per 100 parts per weight of a 50-50 blend of polyphenylene ether and polystyrene. In the sensory analysis procedure, approximately 25 panelists were asked to force rank each group according to odor strength. The frequency of selection for each sample was correlated into quartiles by odor strength, i.e., low odor, mid-low odor, mid-high odor and high odor. The results from Groups A and B are set forth in Figs. 1 and 2, respectively. Figs. 1 and 2 demonstrate that all of the samples produced according to the present method exhibited lower odor as compared with the steam-stripped Control-1 sample. Among the samples produced according to the present invention, Sample A was found to have the lowest odor and was almost as good as the Control-3 sample prepared by four steam-stripping procedures. Additionally, the Control-4 sample prepared using a polysalicylate exhibited relatively high odor as compared with the samples produced according to the methods of the present invention.

**TABLE III -**

| HEADSPACE ODOR ANALYSIS | | | |
|---|---|---|---|
| SAMPLE | ACID/ANHYDRIDE | AMOUNT (pbw) | PROCESS HISTORY |
| GROUP A | | | |
| Control-1 | -- | -- | 120 mm WP, ss* |
| Control-3 | -- | -- | 53 mm WP, 4X ss |
| A | citric acid | 0.5 | 53 mm WP, ss |
| B | citric acid | 1.0 | 53 mm WP, ss |
| C | oxalic acid | 1.0 | 53 mm WP, ss |
| D | glutaric acid | 1.0 | 53 mm WP, ss |
| E | adipic acid | 1.0 | 53 mm WP, ss |
| Control-4 | (polysalicylate) | 3.0 | 53 mm WP, ss |

| GROUP B | | | |
|---|---|---|---|
| Control-1 | -- | -- | 120 mm WP, ss |
| Control-3 | -- | -- | 53 mm WP, 4X ss |
| A | citric acid | 0.5 | 53 mm WP, ss |
| F | phthalic acid | 1.0 | 53 mm WP, ss |
| G | phthalic anhydride | 1.0 | 53 mm WP, ss |
| H | malonic acid | 1.0 | 53 mm WP, ss |
| I | succinic acid | 1.0 | 53 mm WP, ss |
| J | succinic anhydride | 1.0 | 53 mm WP, ss |

| | | | |
|---|---|---|---|
| *ss: steam stripped | | | |

### EXAMPLE 3 (Comparative)

In this example, additional resin samples were prepared according to the methods as described in Example 1, using varying amounts of citric acid as the additive to the polyphenylene ether resin. The amount of citric acid employed in preparing the samples is set forth in Table IV in parts by weight per 100 parts by weight of a 50-50 blend of polyphenylene ether resin and rubber-modified polystyrene (Mobil 5600) resin. The residual butanal levels contained in the resulting samples are also disclosed in Table IV. For comparison, a comparative sample, Control-5, was also prepared wherein no citric acid was added to the polyphenylene ether resin during melt compounding.

**TABLE IV-**

| RESIDUAL BUTANAL | | |
|---|---|---|
| SAMPLE | AMOUNT (pbw) | BUTANAL (ppm) |
| Control-5 | -- | 36.8 |
| K | 0.10 | 25.6 |
| L | 0.50 | 16.5 |
| M | 1.00 | 17.3 |

The results in Table IV further demonstrate the significantly reduced levels of butanal provided by the methods according to the present invention, even when the polyphenylene ether resin initially contains a relatively low level of butanal.

### EXAMPLE 4

In this example, a method wherein the carboxylic acid or anhydride is added in aqueous form is demonstrated. Specifically, a polyphenylene ether resin powder having an intrinsic viscosity of 0.40 dl/g in chloroform at 25°C is extruded using a 53 mm Werner-Pfleiderer twin screw extruder at a throughput rate of about 12.6g/s (100 lbs/hr) and a screw speed of 250 rpm. The melt temperature is about 343°C (650°F). A 25 weight percent solution of citric acid is injected at a rate of 0.38 g/s (3 lbs/hr) into the extruder at a location downstream of the melting transition zone. The citric acid solution is mixed intimately with the plasticated resin. A vacuum of approximately 50.8 to 101.6 kPa (15 to 30 inches Hg) is applied downstream from the injection port in order to devolatize the resin. The resulting polyphenylene ether extrudate has a low concentration of butanal and a reduced odor. Additionally, screw wear in the melting transition zone is greatly reduced.

### EXAMPLE 5

A polyphenylene ether resin powder is extruded in a 53 mm Werner-Pfleiderer twin screw extruder at a throughput rate of 12.6 g/s (100 lbs/hr) and is steam stripped with an aqueous 25 weight percent citric acid solution as described in Example 4. Following devolatization of the polyphenylene ether resin, polystyrene is added at a rate of about 12.6 g/s (100 lbs/hr) via a side feeder. Downstream from the polystyrene feeder, water is injected at a rate of 0.38 g/s (3 lbs/hr) followed by application of a vacuum of about 50.8 - 101.6 kPa (15-30 inches Hg). The resulting 50-50 polyphenylene ether-polystyrene extrudate has a low concentration of butanal and reduced odor. Additionally, screw wear in the melting transition zone is greatly reduced.

The preceding examples are set forth to illustrate specific embodiments of the invention and are not intended to limit the scope of the methods of the present invention. Additional embodiments and advantages within the scope of the claimed invention will be apparent to one of ordinary skill in the art.

## Claims

1. A method for reducing the butanal content of a polyphenylene ether resin, comprising the steps of adding an aqueous solution of a compound selected from the group consisting of carboxylic acids and anhydrides and carbonic acid to the polyphenylene ether resin during melt compounding of the polyphenylene ether resin, and vacuum venting the polyphenylene ether resin melt containing the aqueous solution of the compound.

2. A method as defined by Claim 1 wherein the acid or anhydride is added in an amount of from 0.01 to 10 parts by weight per 100 parts by weight polyphenylene ether resin.

3. A method as defined by Claim 2 wherein the acid or anhydride is added in an amount of from 0.05 to 5 parts by weight per 100 parts by weight polyphenylene ether resin.

4. A method as defined by Claim 1 wherein the aqueous solution contains from 5 to 75 weight percent of the acid or anhydride.

5. A method as defined by Claim 1 wherein the aqueous solution comprises a carboxylic acid or anhydride selected from the group consisting of citric acid, oxalic acid, adipic acid, glutaric acid, malonic acid, succinic acid, phthalic acid, maleic acid, anhydrides of these acids and mixtures thereof.

6. A method as defined by Claim 1, wherein the polyphenylene ether resin comprises poly(2,6-dimethyl-1,4-phenylene) oxide or poly(2,3,6-trimethyl-1,4-phenylene) oxide or a copolymer or a blend thereof.

7. A method as defined by Claim 1 comprising the steps of heating a polyphenylene ether resin containing butanal above the resin's glass transition temperature, melt compounding the resin with an aqueous solution of citric acid, and vacuum venting the resulting water/resin mixture.

8. A method as defined by any preceding claim further comprising forming a food packaging material.

9. A method as defined by any preceding claim further comprising forming a food packaing article by injection molding, thermoforming or by manufacturing a foam sheet.

## Patentansprüche

1. Verfahren zur Verringerung des Butanalgehaltes eines Polyphenylenetherharzes, bei welchem man eine wässrige Lösung einer Verbindung ausgewählt aus der Gruppe bestehend aus Carbonsäuren und -anhydriden und Kohlensäure zum Polyphenylenetherharz zufügt, während das Polyphenylenetherharz schmelzcompoundiert wird, und die Polyphenylenetherharzschmelze, welche die wässrige Lösung der Verbindung enthält, evakuiert.

2. Verfahren nach Anspruch 1, dadurch gekennzeichnet, daß die Säure oder das Anhydrid in einer Menge von zwischen 0,01 bis 10 Gewichtsteilen pro 100 Gewichtsteile Polyphenylenetherharz zugefügt wird.

3. Verfahren nach Anspruch 2, dadurch gekennzeichnet, daß die Säure oder das Anhydrid in einer Menge von zwischen 0,05 bis 5 Gewichtsteilen pro 100 Gewichtsteile Polyphenylenetherharz zugefügt wird.

4. Verfahren nach Anspruch 1, dadurch gekennzeichnet, daß die wässrige Lösung zwischen 5 und 75 Gewichtsprozent der Säure oder des Anhydrids enthält.

5. Verfahren nach Anspruch 1, dadurch gekennzeichnet, daß die wässrige Lösung eine Carbonsäure oder ein Carbonsäureanhydrid aufweist, ausgewählt aus der Gruppe bestehend aus Zitronensäure, Oxalsäure, Adipinsäure, Glutarsäure, Malonsäure, Bernsteinsäure, Phthalsäure, Maleinsäure, Anhydride dieser Säuren und Mischungen daraus.

6. Verfahren nach Anspruch 1, dadurch gekennzeichnet, daß das Polyphenylenetherharz Poly(2,6-dimethyl-1,4-phenylen)oxid oder Poly(2,3-trimethyl-1,4-phenylen)oxid oder ein Copolymer oder ein Blend daraus aufweist.

7. Verfahren nach Anspruch 1, bei welchem man ein Polyphenylenetherharz, welches Butanal enthält, über die Glasübergangstemperatur des Harzes erhitzt, das Harz mit einer wässrigen Lösung von Zitronensäure schmelzcompoundiert und die resultierende Wasser/Harzmischung evakuiert.

8. Verfahren nach einem der vorhergehenden Ansprüche, bei welchem man weiterhin ein Material für Lebensmittelverpackungen bildet.

9. Verfahren nach einem der vorhergehenden Ansprüche, bei welchem man weiters einen Lebensmittelverpackungsgegenstand durch Injektionsspritzen, Thermoformen oder durch Herstellung einer Schaumfolie bildet.

## Revendications

1. Procédé pour réduire la teneur en butanal d'une résine de poly(oxyde de phénylène), qui comprend les étapes consistant à ajouter une solution aqueuse d'un composé choisi parmi les acides carboxyliques, les anhydrides carboxyliques et l'acide carbonique, à la résine de poly(oxyde de phénylène) pendant le mélange à l'état fondu de la résine de poly(oxyde de phénylène), et à purger sous vide la masse fondue de résine de poly(oxyde de phénylène) contenant la solution aqueuse du composé.

2. Procédé selon la revendication 1, dans lequel on ajoute l'acide ou l'anhydride à raison de 0,01 à 10 parties en poids pour 100 parties en poids de résine de poly(oxyde de phénylène).

3. Procédé selon la revendication 2, dans lequel on ajoute l'acide ou l'anhydride à raison de 0,05 à 5 parties en poids pour 100 parties en poids de résine de poly(oxyde de phénylène).

4. Procédé selon la revendication 1, dans lequel la solution aqueuse contient 5 à 75 % en poids de l'acide ou de l'anhydride.

5. Procédé selon la revendication 1, dans lequel la solution aqueuse contient un acide carboxylique ou un anhydride carboxylique choisi dans le groupe constitué de l'acide citrique, l'acide oxalique, l'acide adipique, l'acide glutarique, l'acide malonique, l'acide succinique, l'acide phtalique, l'acide maléique, les anhydrides de ces acides et leurs mélanges.

6. Procédé selon la revendication 1, dans lequel la résine de poly(oxyde de phénylène) comprend du poly(oxyde de 2,6-diméthyl-1,4-phénylène) ou du poly(oxyde de 2,3,6-triméthyl-1,4-phénylène) ou un copolymère ou un mélange de ces composés.

7. Procédé selon la revendication 1, qui comprend les étapes consistant à chauffer une résine de poly(oxyde de phénylène) contenant du butanal à des températures supérieures à sa température de transition vitreuse, à mélanger la résine à l'état fondu avec une solution aqueuse d'acide citrique et à purger sous vide le mélange résultant eau/résine.

8. Procédé selon l'une quelconque des revendications précédentes, qui comprend en outre la formation d'un matériau pour l'emballage de la nourriture.

9. Procédé selon l'une quelconque des revendications précédentes, qui comprend en outre la formation d'un article pour l'emballage de la nourriture, par moulage par injection, par thermoformage ou par fabrication d'une feuille de mousse.
